# EUROPEAN PATENT APPLICATION

(11) **EP 4 254 052 A2**
(43) Date of publication of application: **04.10.2023**
(21) Application number: 23193418.3
(22) Date of filing: 30.03.2020
(51) Int. Cl.: G02C 3/02

(54) **HELMET ASSEMBLY WITH EYEWEAR AND AIR DEFLECTOR SYSTEMS**

(30) Priority: 29.03.2019 US 201962826880 P; 19.03.2020 US 202016824555
(62) Divisional of application: 20166576.7
(71) Applicant: 100% Speedlab, LLC, San Diego, CA 92123 (US)
(72) Inventor: TAN, Dennis C., San Diego, 92123 (US); YOUNG, Michael D., San Diego, 92123 (US)
(74) Representative: Murgitroyd & Company

(57) **Abstract**

A helmet is described herein. The helmet can be configured to hold the arms of a corresponding eyewear piece, such as an eyeglass or sunglass, through one or more features of the helmet. The helmet can further include an air deflector visor. The one or more features, such as one or more channels, allows for the helmet to receive and hold the eyewear of a wearer. Additionally, the helmet visor can utilize deflector vents to redirect airflow around the helmet for lower drag and/or deflect airflow to portions of the helmet to aid in the cooling of the wearer.

## Description

### TECHNICAL FIELD

One or more embodiments relate generally to sport helmets and, more particularly, to helmets configured to receive corresponding sunglasses and helmets with air deflectors.

### BACKGROUND

Helmets are worn for various sports or activities, such as motorsports, powersports, snowsports, watersports, biking, or the like, to protect wearers' heads, for example, by absorbing impacts. Styles of helmets may include closed helmets and open faced helmets. A closed helmet may include a tinted visor, but an open faced helmet typically does not include any type of eyewear. Thus, wearers of the helmet generally also wear eyewear such as sunglasses to provide eye protection.

### SUMMARY

Systems and methods are provided in accordance with one or more embodiments directed to a helmet assembly. In a certain embodiment, the helmet assembly may include an outer shell configured to be disposed at least partly around a head of a wearer. The outer shell may include one or more channels configured to receive a portion of a corresponding eyewear and hold the eyewear relative to the outer shell when receiving the corresponding eyewear.

In a certain such embodiment, the outer shell may include a first channel disposed on a left side of the outer shell and a second channel on a right side of the outer shell. The first channel may be configured to receive a first arm of the eyewear and the second channel may be configured to receive a second arm of the eyewear. In a certain such embodiment, the first arm and/or the second arm may be curved according to a first curvature and the corresponding first channel and/or the second channel may be curved according to a second curvature corresponding to the first curvature. In a certain such embodiment, the first channel and/or the second channel may be curved to hold the corresponding first arm and/or the second arm within the first channel and/or the second channel. In an additional embodiment, the first channel and/or the second channel may include a substantially horizontal convex shape.

In a certain such embodiment, the one or more channels may be configured to hold the eyewear such that a lens of the eyewear is disposed on a rearward portion of the outer shell.

In a certain such embodiment, a liner may be disposed within the outer shell.

In a certain such embodiment, a compressible material may be disposed within the one or more channels.

In a certain such embodiment, a visor may be coupled to the outer shell. The visor may include a vent disposed on a lower portion of the visor. In a certain such embodiment, the vent may be configured to direct airflow to a portion of the outer shell and/or the wearer's head.

In a certain such embodiment, the helmet assembly may further include the eyewear.

In a certain such embodiment, a method of using the helmet assembly may be further disclosed. The method may include disposing the outer shell around the head of the wearer and disposing the portion of the eyewear within the one or more channels. In a certain such embodiment, the outer shell may include a first channel disposed on a left side of the outer shell and a second channel on a right side of the outer shell and the disposing the portion of the eyewear within the one or more channels may include disposing a first arm of the eyewear within the first channel and disposing a second arm of the eyewear within the second channel. In a certain such embodiment, the method may further include holding the first arm of the eyewear within the first channel and holding the second arm of the eyewear within the second channel.

In another embodiment, a helmet may be further disclosed. The helmet may include an outer shell configured to be disposed at least partly around a head of a wearer and a visor coupled to the outer shell and including a vent disposed on a lower portion of the visor. The vent may be configured to direct airflow to a portion of the outer shell and/or the wearer's head.

In a certain such embodiment, the vent may be configured to direct airflow to a portion of the outer shell and/or the wearer's head. In a certain such embodiment, the outer shell may include an opening and the vent may be configured to direct airflow to the opening.

In a certain such embodiment, the vent may be configured to direct airflow around the outer shell.

In a certain such embodiment, the outer shell may include one or more channels configured to receive a portion of a corresponding eyewear and hold the eyewear relative to the outer shell when receiving the corresponding eyewear.

In a certain such embodiment, the one or more channels are configured to hold the eyewear such that a lens of the eyewear is disposed on a rearward portion of the outer shell.

### BRIEF DESCRIPTION OF THE DRAWINGS

Fig. 1 shows a perspective view of a helmet, in accordance with an embodiment of the invention.
Fig. 2 shows a rear view of the helmet of Fig. 1, in accordance with an embodiment of the invention.
Fig. 3 shows a cross-sectional view of the helmet of Fig. 1 along line 3-3' in Fig. 2, in accordance with an embodiment of the invention.
Figs. 4 and 5 show perspective views of the helmet of Fig. 1 with coupled eyewear, in accordance with embodiments of the invention.
Fig. 6 shows a perspective view of a portion of the helmet of Fig. 1, in accordance with an embodiment of the invention.
Fig. 7 shows a front view of the helmet of Fig. 1 with an air deflector visor, in accordance with an embodiment of the invention.
Fig. 8 shows a top view of the helmet and air deflector visor of Fig. 7, in accordance with an embodiment of the invention.
Fig. 9 shows a flowchart detailing a method of using the helmet of Fig. 1, in accordance with an embodiment of the invention.
Fig. 10 shows a flowchart detailing a method of using the air deflector visor, in accordance with an embodiment of the invention.

Embodiments of the invention and their advantages are best understood by referring to the detailed description that follows. It should be appreciated that like reference numerals are used to identify like elements illustrated in one or more of the Figures.

### DETAILED DESCRIPTION

A helmet configured to hold a corresponding eyewear piece and/or including a visor that includes an air deflector is described herein. "Helmet assembly," as used herein, may refer to a helmet, a visor, and/or eyewear associated with the helmet, either separately or in any combination.

The systems and techniques described herein may allow for a helmet to receive and hold an eyewear (e.g., sunglasses) of the wearer. Thus, the helmet can include features to hold the eyewear such that, for example, when weather conditions change, the wearer has a convenient and secure place to hold the eyewear instead of hooking the eyewear on the wearer's clothing or placing it in another unsecure area. Additionally, the helmet described herein may include a visor with air deflector vents to deflect airflow around the helmet for lower drag and/or deflect airflow to portions of the helmet to aid in the cooling of the wearer.

A helmet is disclosed in accordance with various embodiments. In a certain embodiment, the helmet may include an outer shell that includes one or more channels configured to receive and hold at least a portion of a corresponding eyewear. In certain additional embodiments, the helmet can include the visor. The visor can be coupled to the outer shell of the helmet and can include a vent disposed on a lower portion of the visor configured to direct airflow to a portion of the outer shell and/or the wearer's head.

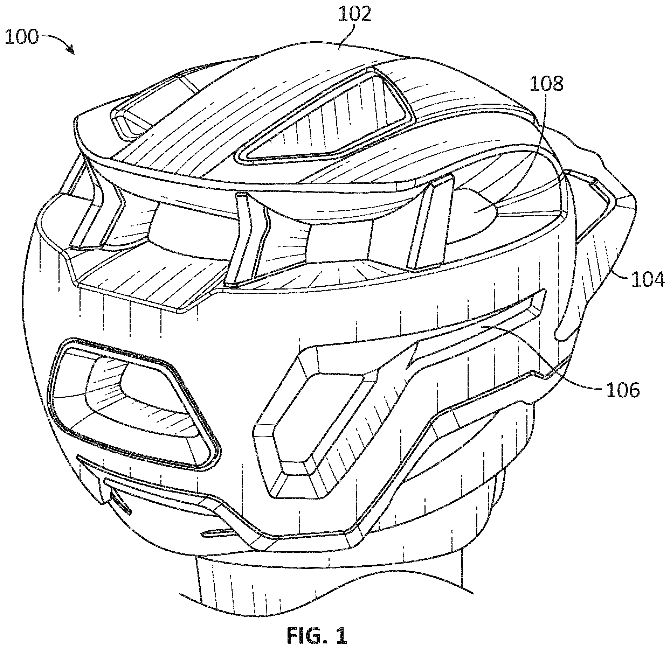

Fig. 1 shows a perspective view of a helmet, in accordance with an embodiment of the invention. Fig. 1 shows helmet 100 with an outer shell 102 and a visor 104. The outer shell 102 may be configured to be disposed around the head of a wearer. In certain embodiments, one or more liners may be disposed within the outer shell 102. The liners may be, for example, padding to absorb and dissipate impacts against the outer shell 102 to protect the wearer's head. Additionally, the outer shell 102 may include channels 106 and openings 108.

Channels 106 may be coupled to or formed within the outer shell 102. The channels 106 may be configured to receive a portion of a corresponding eyewear. For example, the channels 106 may receive the arms (e.g., temples) of a corresponding glasses or sunglasses. The channels 106 may be configured to hold the eyewear such that one or more lenses of the eyewear is disposed on a rearward portion of the outer shell (e.g., when the channels 106 hold the eyewear, the eyewear may be facing rearward). Such a configuration may dispose the eyewear away from the eyes of the wearer and can also dispose the eyewear to prevent or minimize disruption of airflow over the helmet 100.

Visor 104 may be coupled to or integrated within the outer shell 102 (e.g., formed as a part of the outer shell 102). The visor 104 may provide shade to prevent sunlight from shining into the wearer's eyes. Additionally, the visor 104 may include one or more vents configured to redirect air. In a certain embodiment, the visor 104 may, for example, be configured to redirect air into one or more openings 108 (e.g., to cool the wearer) or configured to redirect air around the outer shell 102 (e.g., to decrease air resistance).

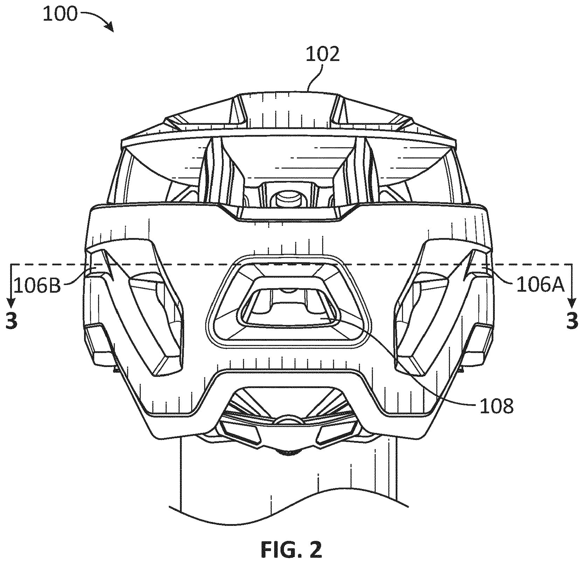

The helmet 100 is further shown in Fig. 2. Fig. 2 shows a rear view of the helmet of Fig. 1, in accordance with an embodiment of the invention. In certain embodiments, the outer shell 102 may include a plurality of channels 106A and 106B. Each of the channels 106A and 106B can be configured to each receive an arm of the eyewear. The channel 106A may be, for example, disposed on one lateral side of the outer shell and the channel 106B may be disposed on an opposite lateral side of the outer shell 102. The channel 106A may thus be configured to receive a first arm of the eyewear and the channel 106B may be configured to receive a second arm of the eyewear.

In certain embodiments, one or both of the channels 106A and 106B may be curved to hold the corresponding first arm and/or the second arm within the first channel and/or the second channel. Such a curvature may correspond to a curvature of the arm(s). In certain embodiments, the curvature may be a substantially convex shape. The convex shape may aid in holding the eyewear to the outer shell 102 by, for example, preventing the arms of the eyewear, when inserted into the channels 106A and/or 106B, from decoupling from the channels 106A and/or 106B unless pushed outward (e.g., the arms are pushed away from each other) or otherwise deformed.

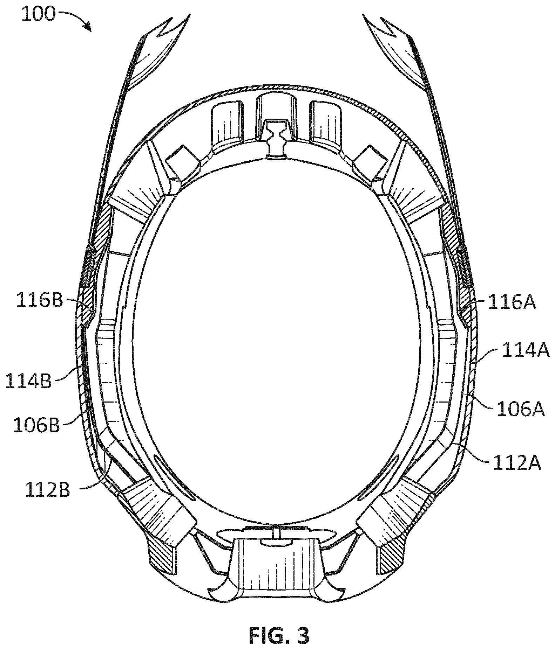

Fig. 3 shows a cross-sectional view of the helmet of Fig. 1 along line 3-3' in Fig. 2, in accordance with an embodiment of the invention. Channel 106A may include a first portion 112A, a second portion 114A, and a third portion 116A. Channel 106B may accordingly include a first portion 112B, a second portion 114B, and a third portion 116B. A portion of the corresponding eyewear, such as the arms of the eyewear, may be inserted into the channels 106A and 106B through first portions 112A and 112B, respectively, before traveling to second portions 114A and 114B. The ends of the arms may then be disposed in the third portions 116A and 116B when the arms are held within the channels 106A and 106B, respectively.

In certain embodiments, the first portions 112A and 112B may include a lead-in that, when the surfaces of the first portions 112A and 112B are extended in an imaginary line towards the back of the outer shell 102, form an angle. Thus, when the arms of the eyewear are moved along the first portions 112A and 112B, force from contact between the arms and the first portions 112A and 112B may provide force to displace the arms apart. The arms may thus, accordingly, provide a reaction force to grip portions of the channels 106A and 106B, respectively, to hold the arms to and/or within the channels 106A and 106B.

The second portions 114A and 114B may be disposed more parallel to each other than first portions 112A and 112B. The second portions 114A and 114B may form surfaces that allow for the arms of the eyewear to more easily slide within the channels 106A and 106B.

The third portions 116A and 116B may be angled in the opposite direction of the first portions 112A and 112B. Thus, the surfaces of the third portions 116A and 116B may be extended in an imaginary line towards the front of the outer shell 102 to form an angle. The third portions 116A and 116B may be shaped so that, if a wearer wishes to remove the arms of the eyewear from the channels 106A and 106B, the arms may need to be displaced apart to remove them from, at least, the third portions 116A and 116B. As such, without the arms of the eyewear being displaced (e.g., by a force provided by the wearer), the arms of the eyewear may be held within the channels 106A and 106B.

In certain embodiments, the first portion 112A, the second portion 114A, and the third portion 116A and/or the first portion 112B, the second portion 114B, and the third portion 116B may form a C-shaped path for the arm(s) of the eyewear to travel along. Such a C-shaped path may allow for the arms to be easily inserted into the channels 106A and 106B and securely held within the channels 106A and 106B when portions of the arms (e.g., the end of the arms) are disposed within the third portions 116A and 116B.

In certain embodiments, the channels 106A and 106B and/or the arms of the eyewear may include features to provide haptic feedback to the wearer that the arms are fully inserted into the channels 106A and 106B. Thus, for example, the arms can be configured to bottom against the walls of the channels 106A and/or 106B. Alternatively or additionally, the C-shaped path may decrease the insertion force required for the arms to be inserted into the channels 106A and/or 106B near the end of travel of the channels 106A and/or 106B. In certain such embodiments, the C-shaped path may position the arms within the channels 106A and/or 106B near the end of travel, effectively automatically moving the arms into the proper position.

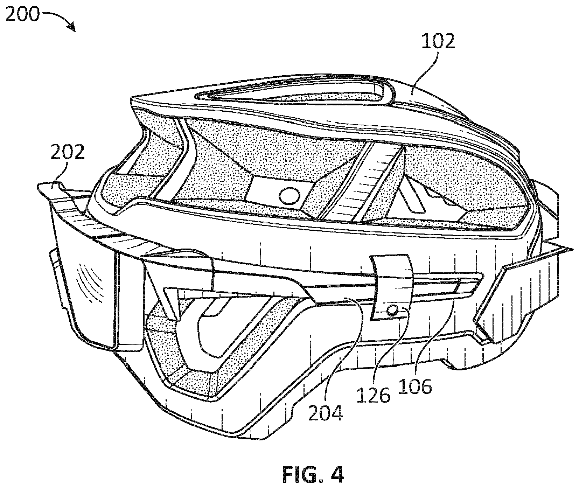

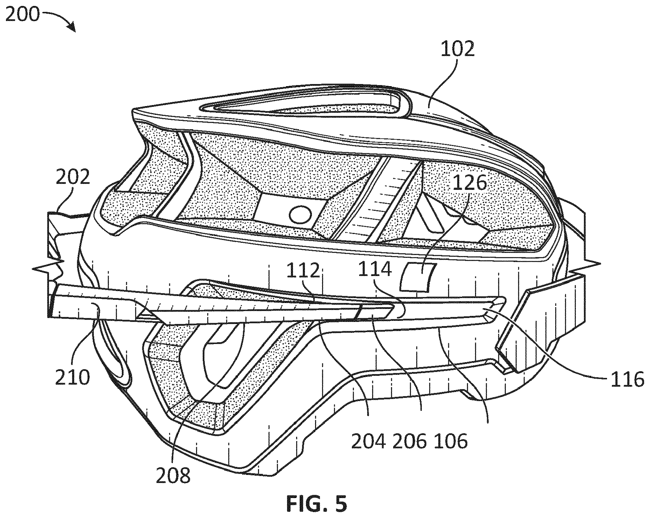

Eyewear being held by the channels are shown in Figs. 4 and 5. Figs. 4 and 5 show perspective views of the helmet of Fig. 1 with coupled eyewear, in accordance with embodiments of the invention. Figs. 4 and 5 illustrate a helmet assembly 200 that includes a helmet with outer shell 102 and eyewear 202. The outer shell 102 may include channels 106 as described herein and the eyewear 202 may include arms 204. Each channel 106 may be configured to receive an arm 204 of the eyewear 202 and hold the arm 204 within the channel 106 when the arm 204 is disposed within, at least, an engaged position (e.g., a position where portions of the arm 204 is disposed proximate to portions of the first portion 112, second portion 114, and third portion 116 of the channel 106).

The helmet assembly 200 may additionally include the latch 126. The latch 126 may be coupled to the outer shell 102 and may be configured to move (e.g., rotate) between an open and a closed position. The latch 126 may include one or more features such as hinges, snaps, magnetic couplings, and/or other features to allow for the latch 126 to move between the positions and to hold the latch 126 within, at least, the closed position. Thus, for example, the latch 126 may include a snap that holds the latch 126 within, at least, the closed position.

In the open position, the latch 126 may allow for the arm 204 to be disposed within the channel 106. When the eyewear 202 is disposed within the channel 106, latch 126 may be moved to the closed position cover a portion of the arm 204 and aid in holding the arm 204 within the channel 106. In certain embodiments, the latch 126 may include a deformable surface that may deform when contacting the arm 204 disposed within the channel 106 to, for example, further aid in holding the arm 204 within the channel 106.

As shown in Fig. 5, the arms 204 of the eyewear 202 may be partially disposed within the channels 106. The arms 204 may include a first portion 210, a second portion 208, and a third portion 206. In Fig. 5, the arms 204 of the eyewear 202 may be inserted into the channels 106 or be removed from the channels 106. When being inserted, the third portion 206 may first be disposed proximate to or contact first portion 112 and then move along the channel 106 to be proximate to or contact the second portion 114 and, afterwards, the third portion 116. When the arms 204 are fully inserted into the channels 106, the first portion 210 of the arm 204 may be disposed proximate to or contact the first portion 112 of the channel 106, the second portion 208 of the arm 204 may be disposed proximate to or contact the second portion 114 of the channel 106, and the third portion 206 may be disposed proximate to or contact the third portion 116.

In certain embodiments, the channel 106 may be shaped to substantially conform with the shape of the arm 204. Thus, for example, one or more of a height, length, width, or curvature of the arm 204 may be shaped to conform with the channel 106. Thus, for example, the arm 204 may be curved to conform with at least a portion of the C-shaped curvature of the channel 106. In certain such embodiments, the eyewear 202 may be configured to complement the helmet 100 and/or vice versa (e.g., the shape of the arm 204 and/or the shaped of the channel 106 may be configured to include complementary geometry). Thus, the eyewear 202 and the helmet 100 may be configured to form the helmet assembly 200.

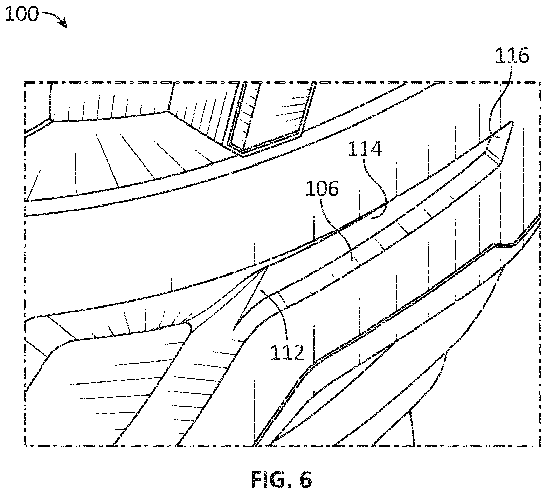

Fig. 6 shows a perspective view of a portion of the helmet of Fig. 1, in accordance with an embodiment of the invention. As shown in Fig. 6, the channel 106 may be defined by sidewalls on, for example, the top, bottom, and forward end of the channel 106. Thus, the channel 106 may be, for example, defined as a depression within the outer shell 102. Furthermore, as shown in Fig. 6, the channel 106 may be curved along each of the first portion 112, the second portion 114, and the third portion 116. Such a curved channel 106 may retain a curved arm 204 within the channel 106. In a certain embodiment, the channel 106 may additionally include a compressible material disposed within the channel 106 to, for example, further aid in holding the arm 204 within the channel 106.

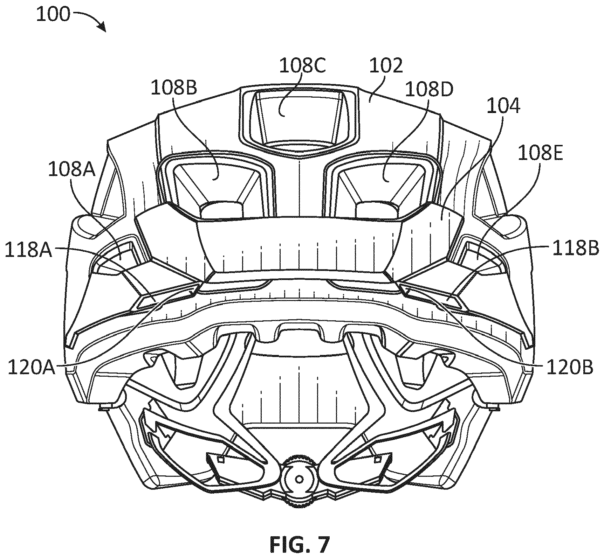

Fig. 7 shows a front view of the helmet of Fig. 1 with an air deflector visor, in accordance with an embodiment of the invention. Fig. 7 illustrates the helmet 100 with the outer shell 102 and the visor 104. The visor 104 may include vents 118A and 118B. The vents 118A and 118B may be disposed on opposing sides of the visor 104, but other embodiments may dispose the vents 118A and 118B on other portions of the visor 104.

The vents 118A and 118B may include vanes 120A and 120B. Vanes 120A and 120B may be configured to deflect airflow. For example, vanes 120A and 120B may be configured to deflect airflow into one or more openings 108A-E. The openings 108A-C may be openings within the outer shell 102 and air deflected into the openings 108A-E may be contact the wearer's head to cool the wearer's head. In certain embodiments, the openings 108A-E may be completely open, but other embodiments may include filters, liners, or mesh disposed within the openings 108A-E. Additionally, the vanes 120A and 120B may be configured to deflect airflow around the helmet 100 (e.g., to decrease drag). While vanes 120A and 120B are shown in Fig. 7, other embodiments may include any number of vanes. Each of the vanes may aid in deflecting airflow into the openings 108A-E, around the helmet 100, and/or to other portions of the helmet 100.

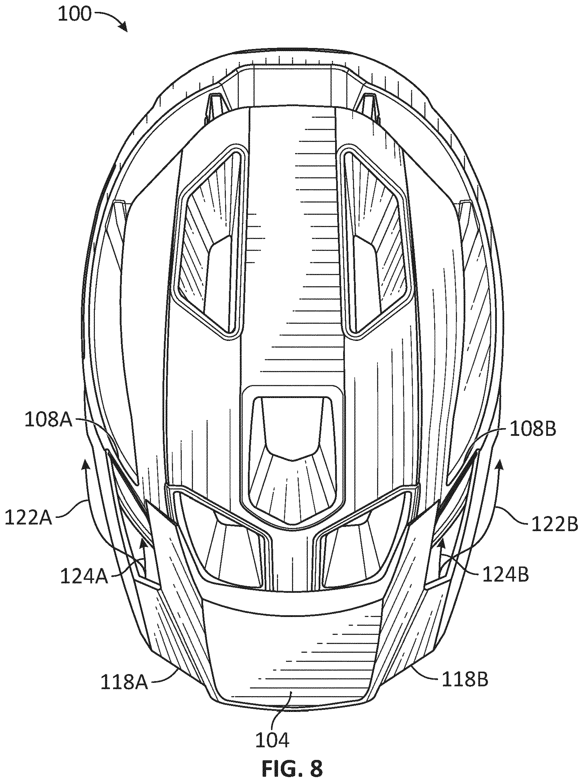

The deflection of such airflow may be illustrated in Fig. 8. Fig. 8 shows a top view of the helmet and air deflector visor of Fig. 7, in accordance with an embodiment of the invention. As shown in Fig. 8, the vents 118A and 118B of the visor 104 may be configured to deflect airflow into openings 108A and 108B along airflow paths 124A and 124B, respectively, and/or around the helmet 100 along airflow paths 122A and 122B, respectively.

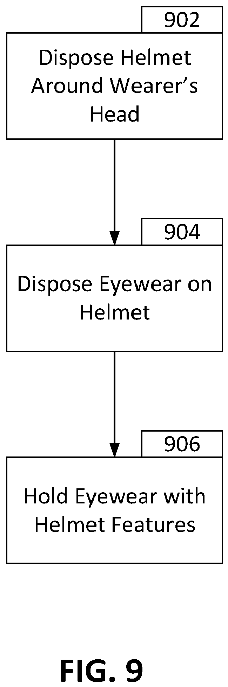

Fig. 9 shows a flowchart detailing a method of using the helmet of Fig. 1, in accordance with an embodiment of the invention. Fig. 9 may illustrate a technique of coupling and holding eyewear with the helmet of Fig. 1.

In block 902, the helmet may be worn by a wearer. Thus, for example, the helmet, including the liners and the outer shell, may be disposed around at least a portion of the wearer's head. The helmet may also be strapped to the wearer or otherwise secured to the wearer's head.

In block 904, eyewear may be disposed on and coupled to the helmet. For example, the arms of the eyewear may be inserted into the channels of the outer shell of the helmet. In certain embodiments, the channel and/or the arms may include features to provide haptic feedback to the wearer that the arms are fully inserted (e.g., through bottoming of the arms against the channel and/or through a decrease in insertion force such as when the C-shaped geometries of the channel and the arms are aligned).

In block 906, the eyewear may be held relative to the helmet. Thus, for example, the channels may include one or more features to hold the eyewear relative to the helmet unless a force is applied to the eyewear to remove the eyewear from the helmet.

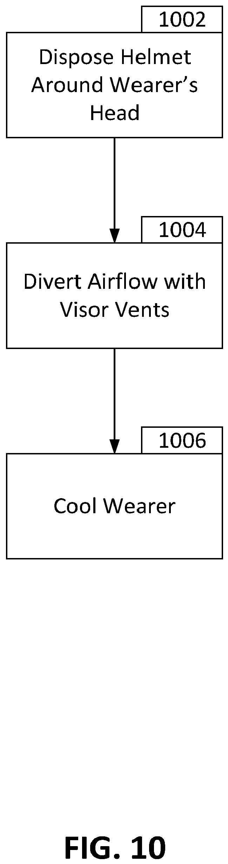

Fig. 10 shows a flowchart detailing a method of using the air deflector visor, in accordance with an embodiment of the invention. In block 1002, the helmet may be disposed around the wearer's head and worn by the wearer, similar to that in block 902.

In block 1004, airflow may be diverted by vents of the visor. For example, the vents may include vanes that are configured to divert airflow. Airflow may be diverted around the helmet to decrease drag, or diverted into one or more openings of the helmet. If the airflow is diverted into the openings of the helmet, the airflow may cool the wearer in block 1006.

## Claims

1. A helmet (100) comprising:
an outer shell (102) configured to be disposed at least partly around a head of a wearer; and
a visor (104) coupled to the outer shell and comprising one or more vents (118A, 118B) disposed on a lower portion of the visor, wherein the one or more vents are configured to direct airflow to a portion of the outer shell.

2. The helmet of claim 1, wherein the one or more vents include two vents disposed on opposing sides of the visor.

3. The helmet of claim 1 or claim 2, wherein each of the one or more vents includes a vane (120A, 120B), and wherein the respective vane is configured to deflect airflow from the vent into one or more openings within the outer shell to contact a wearer's head.

4. The helmet of claim 3, wherein the one or more openings within the outer shell each include a filter.

5. The helmet of claim 3, wherein the one or more openings within the outer shell each include a mesh.

6. The helmet of claim 3, wherein the respective vanes are further configured to deflect air around the helmet to decrease drag.

7. The helmet of claim 1, wherein the outer shell comprises one or more channels (106) configured to receive a portion of a corresponding eyewear and hold the eyewear relative to the outer shell.

8. The helmet of claim 7, wherein the outer shell comprises a first channel disposed on a left side of the outer shell and a second channel on a right side of the outer shell, the first channel being configured to receive a first arm of the eyewear and the second channel being configured to receive a second arm of the eyewear.

9. The helmet of claim 8, wherein the first channel and second channel are configured to hold the eyewear such that a lens of the eye wear is disposed on a rearward portion of the outer shell.

10. The helmet of claim 9, wherein the first channel and the second channel are curved.

11. The helmet of claim 9, wherein the first channel and the second channel comprise a substantially horizontal convex shape.

12. A system comprising the helmet of claim 7, the system further comprising the eyewear and a latch disposed on the helmet and configured to hold an arm of the eyewear within a channel of the one or more channels.
